Europäisches Patentamt

European Patent Office

Office européen des brevets

(19)

(11) Numéro de publication: **0 100 263**
**A1**

(12) **DEMANDE DE BREVET EUROPEEN**

(21) Numéro de dépôt: 83401426.8

(22) Date de dépôt: **11.07.83**

(51) Int. Cl.³: **B 01 D 1/26, B 01 D 1/10**

(30) Priorité: **20.07.82 FR 8212668**

(43) Date de publication de la demande: **08.02.84**
Bulletin 84/6

(84) Etats contractants désignés: **AT BE CH DE GB IT LI LU NL SE**

(71) Demandeur: **LAGUILHARRE S.A., 2, avenue du 18 Juin 1940, F-92500 Rueil Malmaison (FR)**

(72) Inventeur: **Cibolt, Jacques Jean, 164 Bis, rue de l'Université, F-75007 Paris (FR)**

(74) Mandataire: **Kedinger, Jean-Paul et al, c/o Cabinet Malemont 42, avenue du Président Wilson, F-75116 Paris (FR)**

(54) **Perfectionnement aux évaporateurs du type à multiple effet.**

(57) L'évaporateur du type à multiple effet, destiné à concentrer un produit liquide tel que du lait, comporte dans un corps de chauffe (1) alimenté en vapeur, une surface chauffante verticale (2) reliant une chambre d'alimentation (5) en produit liquide à concentrer et une chambre d'extraction (6) de la vapeur créée par l'évaporation et/ou du produit liquide concentré. La chambre d'alimentation (5), le corps de chauffe (1) et la chambre d'extraction (6) sont chacun divisés par un ou plusieurs cloisonnements (7, 8) en au moins deux compartiments indépendants (9, 10, 11), les compartiments (9, 10, 11) de la chambre d'alimentation (5), pourvus chacun d'une arrivée (12, 13, 14) de produit liquide à concentrer, étant reliés respectivement aux compartiments (20, 21, 22) de la chambre d'extraction (6), pourvus chacun d'un moyen d'extraction (25, 26, 27), par l'un des compartiments (15, 16, 17) du coprs de chauffe (1), pourvus chacun d'une arrivée de vapeur (37, 34, 35), et en ce que chaque compartiment (20, 21, 22) de la chambre d'extraction (6) est relié à l'arrivée de vapeur du compartiment du corps de chauffe correspondant à un autre compartiment de la chambre d'extraction.

EP 0 100 263 A1

Perfectionnement aux évaporateurs du type à multiple effet

La présente invention a pour objet un nouvel évaporateur pour la concentration d'un produit liquide tel que du lait par exemple, comportant, dans un corps de chauffe alimenté en vapeur, une surface chauffante verticale reliant une chambre d'alimentation en produit liquide à concentrer et une chambre d'extraction de la vapeur créée par l'évaporation et/ou du produit liquide à concentré.

On connaît déjà des installations d'évaporation à multiple effet, constituées par plusieurs évaporateurs indépendants de ce type, la chambre d'extraction de chacun de ces évaporateurs étant reliée par une tubulure de vapeur au corps de chauffe de l'évaporateur suivant. Lesdits évaporateurs étant généralement disposés à une distance non négligeable les uns des autres, l'installation qui les comprend occupe souvent un espace important, ce qui soulève évidemment un problème critique quand les locaux dont on dispose sont de taille insuffisante.

La présente invention permet d'apporter à ce problème une solution à la fois simple et économique. A cet effet, l'évaporateur selon l'invention, qui est du type rappelé en préambule de la présente description, se caractérise en ce que la chambre d'alimentation, le corps de chauffe et la chambre d'extraction sont chacun divisés par un ou plusieurs cloisonnements en au moins deux compartiments indépendants, les compartiments de la chambre d'alimentation, pourvus chacun d'une arrivée de produit liquide à concentrer, étant reliés respectivement aux compartiments de la chambre d'extraction, pourvus chacun d'un moyen d'extraction, par l'un des compartiments du corps de chauffe, pourvus chacun d'une arrivée de vapeur et en ce que chaque compartiment de la chambre d'extraction est relié à l'arrivée de vapeur du compartiment du corps de chauffe correspondant à un autre compartiment de la chambre d'extraction.

On comprendra que grâce à cet argument particulier, il est possible de réaliser une installation d'évaporation du type à multiple effet dont l'encombrement est minimum.

Par ailleurs, dans les installations connues rappelées ci-dessus et dont les corps de chauffe fonctionnent à pression réduite ou en surpression, il est nécessaire que toute la paroi latérale du corps de chauffe de chacun des évaporateurs soit conçue de manière à supporter la différence de pression existant entre celle régnant à l'extérieur de cette paroi (pression atmosphérique) et celle régnant dans le corps lui-même. Par contre, grâce à la présente invention, et du fait que la différence de pression existant entre les différents compartiments du corps de chauffe est généralement faible, une surface moindre de l'évaporateur est soumise à de fortes différences de pression, ce qui permet enpartie l'utilisation de matériaux moins performants sur le plan de la résistance aux pressions et, partant, moins onéreux.

Il est à noter que la surface chauffante peut être constituée par un faisceau tubulaire.

La forme des cloisonnements pourra être quelconque. Par exemple, ces cloisonnements pourront être sensiblement verticaux et parallèles entre-eux, ou être sensiblement verticaux et reliés par l'un de leurs bords verticaux ; ils pourront encore être sensiblement verticaux et définir chacun une surface cylindrique ou une surface de révolution, les cloisonnements pouvant dans ce cas être coaxiaux.

Avantageusement, la paroi latérale du corps de chauffe et/ou le ou les cloisonnements de ce dernier sont pourvus de moyens de dilatation qui absorbent les variations de longueur que peuvent subir cette paroi, ce ou ces cloisonnements et le faisceau tubulaire lors du fonctionnement de l'évaporateur.

Selon un mode de réalisation de l'invention, ledit ou lesdits cloisonnements du corps de chauffe sont fixés à la plaque tubulaire supérieure du faisceau tubulaire, leur bord inférieur est situé à une distance suffisante de la plaque tubulaire inférieure du faisceau tubulaire, pour qu'il ne puisse prendre appui sur cette dernière lors de la déformation par dilatation du ou des cloisonnements et du faisceau tubulaire et ledit bord inférieur coopère avec des moyens assurant l'étanchéité entre deux compartiments situés de part et d'autre des cloisonnements.

Ainsi, les cloisonnements du corps de chauffe peuvent se dilater librement et la présence sur ces cloisonnements de moyens de dilatation spéciaux et de construction délicate n'est plus nécessaire. Par ailleurs, la mise en oeuvre des moyens d'étanchéité permet de rendre parfaitement indépendants les compartiments du corps de chauffe séparés par les cloisonnements, ce qui est essentiel au fonctionnement de l'évaporateur à multiple effet selon l'invention, dont les différents compartiments doivent être maintenus à des pressions différentes.

Dans le cas où le ou les cloisonnements sont sensiblement verticaux et définissent chacun une surface cylindrique ou une surface de révolution, les moyens assurant l'étanchéité seront de préférence constitués par une paroi verticale fixée à la plaque tubulaire inférieure du faisceau tubulaire et définissant une surface cylindrique ou une surface de révolution, cette paroi et le cloisonnement s'emboîtent l'un dans l'autre de manière à se chevaucher partiellement, la distance séparant le bord inférieur du cloisonnement et le bord supérieur de la paroi respectivement de la plaque tubulaire inférieure et de la plaque tubulaire supérieure du faisceau tubulaire est choisie pour que ledit cloisonnement et ladite paroi forment, en coopération avec les condensats destinés à être présents dans les compartiments du corps de chauffe, un joint hydraulique entre les deux compartiments adjacents.

Les moyens d'étanchéité ainsi définis, de conception et de réalisation extrêmement simples, sont en outre d'un encombrement minimum ce qui permet de disposer d'une surface d'échange thermique maximum.

La hauteur des condensats dans les compartiments du corps de chauffe étant maintenue relativement faible pour disposer d'une surface d'échange la plus grande possible, le ou les cloisonnnements du corps de chauffe s'avance de préférence jusqu'à la partie basse de ce dernier.

L'évaporateur selon l'invention pourra bien entendu être d'un type quelconque. Ainsi, il pourra être du type à ruissellement, les compartiments de la chambre d'alimentation étant situés au-dessus du corps de chauffe et les compartiments de la chambre d'extraction étant situés en-dessous dudit corps, ou encore du type à grimpage, les compartiments de la chambre d'alimentation étant situés en-dessous du corps de chauffe et les compartiments de la chambre d'extraction étant situés au-dessus dudit corps.

L'invention sera mieux comprise en se référant à la description qui va suivre, faite en regard aux dessins annexés dans lesquels :

- la figure 1 est une coupe longitudinale schématique d'un évaporateur à triple effet du type à ruissellement selon l'invention,

- les figures 2 à 5 sont des coupes horizontales partielles de la chambre d'alimentation de plusieurs modes de réalisation de l'évaporateur selon l'invention,

- la figure 6 est une coupe longitudinale schématique effectuée selon la ligne VI-VI de la figure 7 et représentant un évaporateur à double effet du type à ruissellement, les deux effets étant disposés concentriquement, et

- la figure 7 est une coupe selon la ligne VII-VII de l'évaporateur de la figure 6.

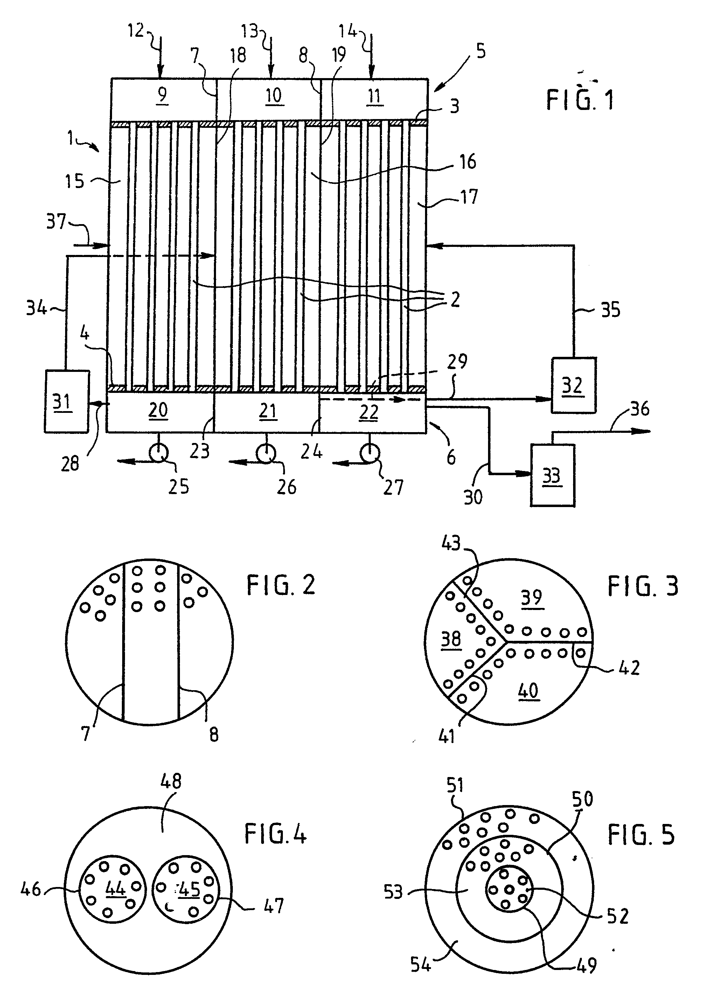

L'évaporateur de la figure 1 comprend un corps de chauffe 1 cylindrique à l'intérieur duquel est disposé verticalement un faisceau tubulaire 2 dont les plaques tubulaires supérieure et inférieure sont figurées respectivement en 3 et 4. Pour la simplicité du dessin, on n'a représenté qu'une série de tubes du faisceau.

Au-dessus de la plaque tubulaire 3 est ménagée une chambre d'alimentation cylindrique 5 et en-dessous de la plaque tubulaire 4 est disposée une chambre d'extraction cylindrique 6.

Conformément à l'invention, la chambre d'alimentation 5 est divisée par deux cloisonnements verticaux et parallèles 7, 8 en trois compartiments 9, 10, 11 dans lesquels pénètrent respectivement trois arrivées de produit liquide à concentrer 12, 13, 14. De la même manière, le corps de chauffe 1 est divisé en trois compartiments 15, 16, 17 par deux cloisonnements verticaux et parallèles

0100263

4

18, 19 situés respectivement dans le même plan que les cloisonnements 7, 8. Enfin, la chambre d'extraction 6 est elle également divisée en trois compartiments 20, 21, 22 par deux cloisonnements verticaux et parallèles 23, 24 situés dans le même plan que les cloisonnements 18, 19.

Il est bien entendu que le nombre de tubes contenus dans chacun des compartiments 15, 16, 17 peuvent éventuellement différer d'un compartiment à l'autre selon les nécessités du traitement.

Les compartiments 20, 21 sont reliés par leur base respectivement aux pompes d'extraction 25, 26 dont les refoulements sont raccordés respectivement aux arrivées 13, 14. Quant au compartiment 22, il est relié par sa base à une pompe 27.

Par ailleurs, les compartiments d'extraction 20, 21, 22 sont reliés par des tubulures de vapeur 28, 29, 30 respectivement à des séparateurs vapeur-liquide 31, 32, 33 qui portent à leur partie supérieure respectivement des tubulures de vapeur 34, 35, 36, les tubulures 34, 35 débouchant respectivement dans les compartiments 16, 17 et la tubulure 36 étant reliée à un condenseur (non représenté). Quant au compartiment 15, il porte une arrivée de vapeur 37.

Le fonctionnement d'ensemble de l'évaporateur ainsi constitué est identique à celui d'un évaporateur classique à triple effet dont le premier effet serait constitué par les compartiments 9, 15, 20, dont le second effet serait constitué par les compartiments 10, 16, 21 et le troisième effet serait constitué par les compartiments 11, 17, 20.

Le produit à concentrer est introduit par l'arrivée 12 dans le compartiment 9 et il est distribué dans la fraction du faisceau tubulaire contenu dans le compartiment 15, par un moyen de répartition quelconque (non représenté), par exemple celui décrit dans le brevet français No. 1 226 700. Après avoir parcouru les tubes de cette fraction et subi de ce fait une première concentration, le produit liquide atteint le compartiment 20 d'où il est repris par la pompe 25 et conduit par l'arrivée 13 dans le compartiment 10. Le produit est ensuite distribué par un moyen de répartition (non représenté) dans la fraction tubulaire contenue dans le compartiment 16 où il subit une concentration plus pous- sée avant d'atteindre le compartiment 21. De là, il est amené par le pompe 26 et l'arrivée 14 dans le compartiment 11 et il subit dans cette dernière partie de l'installation un traitement analogue à celui qu'il a subi préalablement, avant d'atteindre le compartiment 22 à la partie inférieure duquel il est repris par la pompe 27 qui l'évacue.

Par ailleurs, la vapeur créée par l'évaporation du produit dans la fraction du faisceau tubulaire contenu dans le compartiment 15 est dirigé via le compartiment 20, les tubulures 28 et 34 et le séparateur 31, vers le compartiment 16 où elle va servir de source de calories. De la même manière, la vapeur créée par l'évaporation du produit dans la fraction du faisceau tubulaire contenu dans le compartiment 16 est dirigé via le compartiment 21, les tubulures 29 et 35 et le séparateur 32 vers le compartiment 17 où elle va servir de source de calories. Bien entendu, la vapeur qui cède ses calories au produit à concentrer se condense dans les compartiments 15, 16 et 17, les condensats étant soutirés de ces derniers au fur et à mesure de leur fonction, de manière connue par des moyens d'extraction tels une pompe (non représentée).

Les cloisonnements 7, 8, 18, 19, 23, 24 peuvent être constitués par de simples tôles soudées sur les plaques tubulaires 3, 4, sur le fond de la chambre d'extraction 6, sur le couvercle de la chambre d'alimentation 5 et les parois latérales de ces chambres 5, 6 et du corps 1, ces tôles ne nécessitant pas de qualités particulières de résistance à la pression puisque la pression régnant dans le compartiment 15 est généralement pas trop différente de celle régnant dans le compartiment 16 et la pression régnant dans ce dernier est habituellement pas trop différente de celle régnant dans le compartiment 17.

Il va de soi que l'on pourrait apporter au mode de réalisation de l'invention qui vient d'être décrit de nombreuses modifications sans pour autant sortir du cadre de l'invention. Ainsi, il pourrait être prévu moins ou plus de deux cloisonnements dans les chambres 5, 6 et le corps 1 et, partant, moins ou plus de trois compartiments dans ces chambres et corps, ces compartiments pouvant être de dimensions différentes et présenter les formes les plus diverses, par exemple celles représentées par les figures 2 à 5. La forme représentée par la figure 2 correspond à celle que présentent les compartiments de l'évaporateur selon la figure 1. La figure 3 montre des compartiments en forme de secteurs 38, 39, 40, les cloisonnements référencés 41, 42, 43 étant dans ce cas verticaux et reliés par l'un de leurs bords verticaux. La figure 4 montre ces compartiments cylindriques 44, 45, les cloisonnements 46, 47 étant dans ce cas de forme cylindrique et l'espace 48 subsistant de la chambre d'alimentation pouvant éventuellement jouer le rôle de troisième compartiment. Enfin, dans le mode de réalisation de la figure 5, les cloisonnements 49, 50 et l'enveloppe 51 de l'évaporateur définissant un compartiment cylindrique central 52, un premier compartiment annulaire 53 disposé autour du compartiment 52 et un second compartiment annulaire 54 disposé autour du compartiment 53.

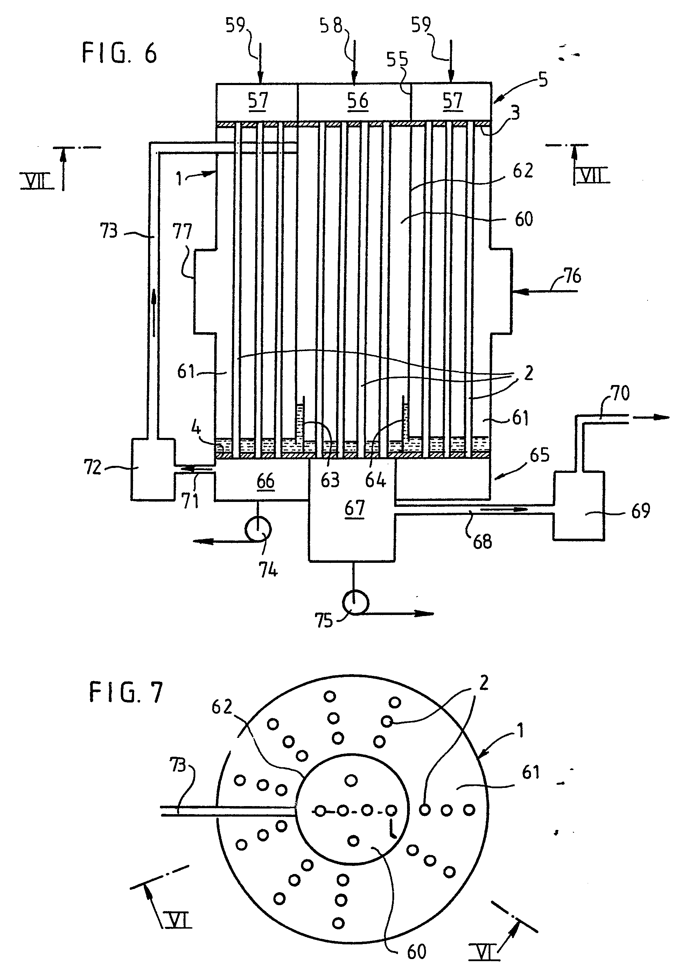

La paroi latérale du corps de chauffe 1 et les cloisonnements 18 et 19 seront de préférence pourvus de moyens de dilatation empêchant toute déformation susceptible d'endommager l'évaporateur et notamment le faisceau tubulaire. Cette possibilité est illustrée par la figure 6 qui représente un évaporateur à deux effets concentriques. Cet évaporateur comporte les mêmes éléments 1 à 5 que l'évaporateur de la figure 1. La chambre d'alimentation 5 est toutefois divisée par un cloisonnement vertical 55 de forme cylindrique, en un compartiment cylindrique central 56 et un compartiment annulaire 57 disposé concentriquement autour du compartiment 56, compartiments dans lesquels pénètrent respectivement deux arrivées de produit à concentrer 58,59. De même, le corps de chauffe 1 est divisé en deux compartiments cylindriques concentriques 60,61 par un cloisonnement cylindrique 62 fixé sur la plaque tubulaire supérieure 3, disposé dans le prolongement du cloisonnement 55 et dont le bord inférieur est situé à une faible distance de la plaque tubulaire inférieure 4. En outre et conformément à l'invention, la base de ce cloisonnement 62 coopère avec des moyens assurant l'étanchéité entre les compartiments 60, 61. Ces moyens sont constitués par une paroi verticale 63 définissant un cylindre qui s'emboîte dans le compartiment 60 de manière à ce que ladite paroi 63 et ledit cloisonnement 62 se chevauchent partiellement. La distance qui sépare le bord inférieur du cloisonnement 62 et le bord supérieur de la paroi 63 respectivement de la plaque tubulaire inférieure 4 et de la plaque tubulaire supérieure 3 est choisie d'une part, pour que lesdits bords ne puissent prendre appui respectivement sur ces derniers lors de la déformation par dilatation du cloisonnement 62, de la paroi 63 et du faisceau tubulaire 2 et d'autre part, pour que ledit cloisonnement 62 et ladite paroi 63 forment, en coopération avec les condensats présents à la base du corps de chauffe 1, un joint hydraulique constitué par un anneau liquide 64 qui assure l'étanchéité entre les compartiments 60, 61. L'Homme de l'Art sera bien entendu parfaitement en mesure de déterminer cette distance ainsi que l'espacement qu'il convient de laisser entre le cloisonnement 62 et la paroi 63 au niveau de leur zone de chevauchement et ce, notamment en fonction de la nature du matériau constituant le cloisonnement 62, la paroi 63 et le faisceau tubulaire, de la hauteur des condensats dans le corps de chauffe et de la différence de pression existant entre les compartiments 60, 61.

Il est à noter que selon une variante, la paroi 63 peut être réalisée de manière telle que ce soit le cylindre défini par le cloisonnement 62 qui s'emboîte dans le cylindre défini par la paroi 63.

Dans le cas de la figure 6 où le compartiment 60 se trouve à une pression inférieure à celle du compartiment 61, il se crée dans la zone de chevauchement une colonne d'eau dont la hauteur par rapport au niveau des condensats dans le compartiment 61 correspond à la différence de pression entre les compartiments 60, 61.

Par ailleurs, une chambre d'extraction cylindrique 65 est ménagée sous

la plaque tubulaire inférieure 4, cette chambre étant constituée de deux compartiments indépendants cylindriques concentriques 66, 67, le compartiment central 67 étant plus haut que l'autre compartiment 66 et ce, de manière à pouvoir aisément relier ce compartiment à une tubulure de vapeur 68 débouchant dans un séparateur vapeur-liquide 69, sans que cette tubulure ne traverse le compartiment 66. La partie supérieure du séparateur 69 est pour sa part reliée par un conduit 70 à un condenseur . De la même manière, une tubulure de vapeur 71 relie le compartiment 66 à un séparateur vapeur-liquide 72 dont la partie supérieure porte une tubulure de vapeur 73 débouchant dans le compartiment 60.

D'autre part, les compartiments 66, 67 sont reliés par leur base respectivement à l'aspiration des pompes d'extraction 74, 75, le refoulement de la pompe 74 étant raccordé à l'arrivée 58. En outre, le compartiment 61 est pourvu d'une arrivée de vapeur 76 et la paroi latérale du corps de chauffe 1 est pourvue d'un soufflet de dilatation cylindrique 77. Enfin, comme dans l'évaporateur de la figure 1, les compartiments 56 et 57 contiennent des moyens de répartition aptes à distribuer le produit à concentrer dans les fractions de tubes contenues respectivement dans les compartiments 60, 61.

L'Homme de l'Art pourra, en se référant aux commentaires précédents concernant le fonctionnement de l'évaporateur de la figure 1, comprendre aisément le fonctionnement de l'évaporateur selon la figure 6, qui opère de la même manière qu'un évaporateur classique à double effet, le premier effet étant constitué par les compartiments 57, 61, 66 et le second effet étant constitué par les compartiments 56, 60 et 67.

Les évaporateurs qui viennent d'être décrits sont du type à ruissellement, mais l'invention s'étend bien entendu aux évaporateurs du type à grimpage. Par ailleurs, la tubulure de vapeur 73 au lieu de traverser le compartiment 61 pourrait pénétrer dans le compartiment 60 en traversant le compartiment 67 et la plaque tubulaire inférieure 4. D'autre part, les évaporateurs selon l'invention pourraient être à recompression mécanique de vapeur ou à thermocompression de vapeur, auquel cas, et si l'on considère par exemple l'évaporateur selon la figure 6, la tubulure 73 porterait une dérivation reliée à l'aspiration d'un compresseur mécanique ou d'un thermocompresseur de vapeur, dont le refoulement serait relié à l'arrivée de vapeur 76.

Enfin, le produit à concentrer, au lieu de pénétrer d'abord dans le compartiment 9 ou 57, pourrait pénétrer d'abord dans le compartiment 10, 11 ou 56, puis traverser en série le ou les compartiments restants.

Revendications

1. Evaporateur du type à multiple effet pour la concentration d'un produit liquide tel que du lait par exemple, comportant, dans un corps de chauffe (1) alimenté en vapeur, une surface chauffante verticale (2) reliant une chambre d'alimentation (5) en produit liquide à concentrer et une chambre d'extraction (6) de la vapeur créée par l'évaporation et/ou du produit liquide concentré, caractérisé en ce que la chambre d'alimentation (5), le corps de chauffe (1) et la chambre d'extraction (6) sont chacun divisés par un ou plusieurs cloisonnements (7, 8 ; 18, 19 ; 23, 24) en au moins deux compartiments indépendants (9, 10, 11 ; 15, 16, 17 ; 20, 21, 22), les compartiments (9, 10, 11) de la chambre d'alimentation (5), pourvus chacun d'une arrivée (12, 13, 14) de produit liquide à concentrer, étant reliés respectivement aux compartiments (20, 21, 22) de la chambre d'extraction (6), pourvus chacun d'un moyen d'extraction (25, 26, 27), par l'un des compartiments (15, 16, 17) du corps de chauffe (1) pourvus chacun d'une arrivée de vapeur (37, 34, 35) et en ce que chaque compartiment (20, 21, 22) de la chambre d'extraction (6) est relié à l'arrivée de vapeur du compartiment du corps de chauffe correspondant à un autre compartiment de la chambre d'extraction.

2. Evaporateur selon la revendication 1, caractérisé en ce que la surface chauffante (2) est constituée par un faisceau tubulaire.

3. Evaporateur selon la revendication 1 ou 2, caractérisé en ce que les cloisonnements sont sensiblement verticaux et parallèles entre eux.

4. Evaporateur selon la revendication 1 ou 2, caractérisé en ce que les cloisonnements sont sensiblement verticaux et reliés par l'un de leurs bords verticaux.

5. Evaporateur selon la revendication 1 ou 2, caractérisé en ce que les les cloisonnements sont sensiblement verticaux et définissent chacun une surface cylindrique.

6. Evaporateur selon la revendication 1 ou 2, caractérisé en ce que les cloisonnements sont sensiblement verticaux et définissent chacun une surface de révolution.

7. Evaporateur selon la revendication 5 ou 6, caractérisé en ce que les cloisonnements sont disposés concentriquement.

8. Evaporateur selon l'une quelconque des revendications précédentes, caractérisé en ce que la paroi latérale du corps de chauffe (1) et/ou le ou les cloisonnements (62) de ce dernier sont pourvus de moyens de dilatation (77).

9. Evaporateur selon l'une quelconque des revendications 2 à 8 caractérisé en ce que ledit ou lesdits cloisonnements (62) du corps de chauffe (1) sont fixés à la plaque tubulaire supérieure (3) du faisceau tubulaire (2), en ce que leur bord inférieur est situé à une distance suffisante de la plaque

tubulaire inférieure (4) du faisceau tubulaire, pour qu'il ne puisse prendre appui sur cette dernière lors de la déformation par dilatation du ou des cloisonnements (62) et du faisceau tubulaire et en ce que ledit bord inférieur coopère avec des moyens assurant l'étanchéité entre les deux compartiments (60, 61) situés respectivement de part et d'autre des cloisonnements (62).

10. Evaporateur selon la revendication 9, dont le ou les cloisonnements sont sensiblement verticaux et définissent chacun une surface cylindrique ou de révolution, caractérisé en ce que les moyens assurant l'étanchéité sont constitués par une paroi verticale (63) fixée à la plaque tubulaire inférieure (4) du faisceau tubulaire (2) et définissant une surface cylindrique ou de révolution, en ce que cette paroi (63) et le cloisonnement (62) s'emboîtent l'un dans l'autre de manière à se chevaucher partiellement et en ce que la distance séparant le bord inférieur du cloisonnement (62) et le bord supérieur de la paroi (63) respectivement de la plaque tubulaire inférieure (4) et de la plaque tubulaire supérieure (3) du faisceau tubulaire est choisie pour que ledit cloisonnement et ladite paroi forment, en coopération avec les condensats destinés à être présents dans les compartiments (50, 61) du corps de chauffe (1), un joint hydraulique (64) entre deux compartiments adjacents (60, 61).

11. Evaporateur selon la revendication 10, caractérisé en ce que le ou les cloisonnements du corps de chauffe s'avancent jusqu'à la partie basse dudit corps.

12. Evaporateur selon l'une quelconque des revendications précédentes, caractérisé en ce qu'il est du type à ruissellement, les compartiments (56, 57) de la chambre d'alimentation (5) étant situés au-dessus du corps de chauffe (1) et les compartiments (66, 67) de la chambre d'extraction (65) étant situés en-dessous dudit corps (1).

13. Evaporateur selon l'une quelconque des revendications 1 à 11 caractérisé en ce qu'il est du type à grimpage, les compartiments de la chambre d'alimentation étant situés en-dessous du corps de chauffe et les compartiments de la chambre d'extraction étant situés au-dessus dudit corps.

0100263

1 / 2

FIG. 1

FIG. 2

FIG. 3

FIG. 4

FIG. 5

FIG. 6

FIG. 7

# 0100263

Office européen
des brevets

## RAPPORT DE RECHERCHE EUROPEENNE

Numéro de la demande

EP 83 40 1426

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | FR-A- 562 476 (A. VINCIK et al.)<br><br>* Page 2, ligne 64 - page 3, ligne 6; figures 5,6 * | 1-3,5, 6,8,11 ,12 | B 01 D 1/26<br>B 01 D 1/10 |
| X | DE-B-1 066 541 (PATENTAUSWERTUNG VOGELBUSCH GmbH)<br>* En entier * | 1-4,9, 12 | |
| X | DE-C- 441 497 (FRÄMBS & FREUDENBERG)<br>* En entier * | 1-4,9, 13 | |
| X | DE-C- 456 193 (E. POKORNY)<br><br>* Page 1, ligne 28 - page 2, ligne 32; figures * | 1-3,5, 8,10, 13 | |
| A | DE-A-2 311 350 (V.E.B.)<br>* Pages 3,4; figures * | 1-4,12 | |
| A | GB-A- 28 925 (J.S. STUDER)<br>* Page 3, lignes 35-38; figure 1 * | 8 | |
| A | GB-A-1 530 489 (BP CHEMICALS LTD.)<br><br>--- -/- | | |

DOMAINES TECHNIQUES RECHERCHES (Int. Cl. 3)

B 01 D

Le présent rapport de recherche a été établi pour toutes les revendications

| Lieu de la recherche<br>LA HAYE | Date d'achèvement de la recherche<br>27-10-1983 | Examinateur<br>VAN BELLEGHEM W.R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82

**Office européen
des brevets**

**RAPPORT DE RECHERCHE EUROPEENNE**

Numéro de la demande

EP  83 40 1426

| | **DOCUMENTS CONSIDERES COMME PERTINENTS** | | Page  2 |
|---|---|---|---|
| Catégorie | Citation du document avec indication, en cas de besoin, des parties pertinentes | Revendication concernée | CLASSEMENT DE LA DEMANDE (Int. Cl. ³) |
| A | GB-A-1 040 224  (P. MURRAY) | | |
| | --- | | |
| A | GB-A-  180 963  (T. RIGBY) | | |
| | --- | | |
| A | DE-A-2 015 235  (US ATOMIC ENERGY COMMISION) | | |
| | ----- | | |
| | | | **DOMAINES TECHNIQUES RECHERCHES (Int. Cl. ³)** |

Le présent rapport de recherche a été établi pour toutes les revendications

| Lieu de la recherche LA HAYE | Date d'achèvement de la recherche 27-10-1983 | Examinateur VAN BELLEGHEM W.R. |
|---|---|---|